# EUROPEAN PATENT APPLICATION

(11) **EP 2 998 708 A1**
(43) Date of publication of application: **23.03.2016**
(21) Application number: 14798009.8
(22) Date of filing: 06.02.2014
(51) Int. Cl.: G01D 5/244, H02K 11/00

(54) **ROTATION ANGLE DETECTION SYSTEM, ROTATION ANGLE DETECTION METHOD, ROTATION ANGLE DETECTION UNIT, AND SYNCHRONOUS MOTOR CONTROL SYSTEM**

(30) Priority: 15.05.2013 JP 2013103283
(71) Applicant: IAI Corporation, Shizuoka 424-0103 (JP)
(72) Inventor: IWAMOTO Akira, Shizuoka-Shi Shizuoka 424-0103 (JP); AKAGAWA Hisami, Shizuoka-Shi Shizuoka 424-0103 (JP); YAMADA Akihiro, Shizuoka-Shi Shizuoka 424-0103 (JP)
(74) Representative: Epping - Hermann - Fischer
(86) International application number: PCT/JP2014/052733
(87) International publication number: WO 2014/185104

(57) **Abstract**

The purpose of the present invention is to detect the absolute rotation angle of a rotor in a simple manner. In order to detect the rotation angle of a rotor of a stepping motor including a rotor and a stator winding, a first magnetic sensor (151) having a resolution of 200 steps per mechanical angle of 360 degrees detects the rotation angle of a rotor. An incremental encoder (60) outputs a plurality of types of signals periodically in accordance with the rotation angle of the rotor. A rotation angle acquirer (122) in a controller (102) acquires the absolute rotation angle of the rotor on the basis of the rotor rotation angle detected by the first magnetic sensor (151) and the type of signal output by the incremental encoder (60).

## Description

### Technical Field

The present disclosure relates to a rotation angle detection system, a rotation angle detection method, a rotation angle detection unit and a synchronous motor control system.

### Background Art

In an actuator used for an industrial robot, detection of a rotation angle of a rotating shaft of a motor is performed and detection of a position of a movable part is further performed based on the rotation angle. An absolute encoder or a resolver, or the like is generally used for detection of the rotation angle. Examples of encoders include absolute encoders and incremental encoders. The incremental encoders are inexpensive, but cannot detect an absolute position, thus requiring an origin sensor, an original point returning operation and/or the like. There are optical, magnetic and other types of absolute encoders which can detect an absolute angle in one rotation. However, the absolute encoders have complicated structures and are expensive. For example, a magnetic type absolute encoder of Patent Literature 1 includes, on the shaft of the motor, a plurality of rotation detectors to detect the rotation angle.

### Citation List

### Patent Literature

Patent Literature 1: Unexamined Japanese Patent Application Kokai Publication No. 2011-107048.

### Summary of Invention

### Technical Problem

However, the above-mentioned conventional magnetic type absolute encoder needs a plurality of rotation detectors and/or analog/digital (A/D) converters, making the structure complicated, and in addition, requires a complicated control circuit, resulting in cost increases.

The present disclosure is made in consideration of the above-mentioned problems. An objective of the present disclosure is to easily detect an absolute rotation angle of a rotor.

### Solution to Problem

To achieve the objective, a rotation angle detection system to detect a rotation angle of a rotor in a synchronous motor including the rotor and a stator winding, the rotation angle detection system comprising:
a rotation angle detector configured to detect the rotation angle of the rotor and having a resolution equal to or more than the number of pole pairs of the synchronous motor for a mechanical angle of 360 degrees of the rotor;
a signal outputter configured to periodically output a plurality of types of signals according to the rotation angle of the rotor; and
an absolute rotation angle acquirer configured to acquire an absolute rotation angle of the rotor based on the rotation angle of the rotor detected by the rotation angle detector and the types of the signals output by the signal outputter.

The resolution may be set to be equal to or more than the number of pole pairs multiplied by the number of cycles of the combination of the types of signals output by the signal outputter while the rotor rotates at an angle corresponding to one pole pair of the synchronous motor.

The rotation angle detection system may include an electric current supply controller configured to perform a control of supplying a plurality of types of electric currents to the stator winding,
wherein the absolute rotation angle acquirer acquires the absolute rotation angle of the rotor based on the types of the electric currents supplied by the electric current supply controller in addition to the rotation angle of the rotor detected by the rotation angle detector and the types of the signals output by the signal outputter.

The rotation angle detection system may include:
a revolution count detector configured to detect the number of revolutions of the rotor; and
a moving object position acquirer configured to acquire a position of a movable object that is movable on a straight line driven by the synchronous motor based on the rotation angle of the rotor acquired by the absolute rotation angle acquirer and the number of revolutions of the rotor detected by the revolution count detector.

The synchronous motor may be a stepping motor.

To achieve the objective, a rotation angle detection method of a second aspect of the present disclosure is a rotation angle detection method by a rotation angle detection system to detect the rotation angle of the rotor in a synchronous motor including a rotor and a stator winding, the method comprising: a rotation angle detection step having a resolution equal to or more than the number of pole pairs of the synchronous motor for a mechanical angle of 360 degrees of the rotor, and to detect the rotation angle of the rotor;
a signal output step to periodically output a plurality of types of signals according to the rotation angle of the rotor; and
an absolute rotation angle acquisition step to acquire an absolute rotation angle of the rotor based on the rotation angle of the rotor detected in the rotation angle detection step and the type of signal output in the signal output step.

The resolution may be equal to or more than the number of pole pairs of the synchronous motor multiplied by the number of cycles of the combination of the types of signals output in the signal output step while the rotor rotates an angle corresponding to one pole pair of the synchronous motor.

The rotation angle detection method may include an electric current supply control step performing a control to supply a plurality of types of electric currents to the stator winding;
wherein, in the absolute rotation angle acquisition step, the absolute rotation angle of the rotor is acquired based on the type of electric current supplied in the electric current supply control step in addition to the rotation angle of the rotor detected in the rotation angle detection step and the type of signal output in the signal output step.

The rotation angle detection method may include:
the number-of-revolution detection step to detect the number of revolutions of the rotor; and
a moving object position acquisition step to acquire a position of a moving object moving on a straight line driven by the synchronous motor based on the rotation angle of the rotor acquired in the absolute rotation angle acquisition step and the number of revolutions of the rotor detected in the number-of-revolution detection step.

The synchronous motor may be a stepping motor.

To achieve the objective, a synchronous motor control system of a third aspect of the present disclosure may include: any one of the above-mentioned rotation angle detection systems; and
a drive controller configured to control driving of the synchronous motor based on a signal indicating the rotation angle of the rotor detected by the rotation angle detector.

To achieve the objective, a synchronous motor control system of a fourth aspect of the present disclosure includes:
any one of the above-mentioned rotation angle detection systems; and
a drive controller configured to control driving of the synchronous motor based on types of signals output by the signal outputter.

To achieve the objective, a synchronous motor control system of a fourth aspect of the present disclosure is a rotation angle detection unit to detect the rotation angle of the rotor in the synchronous motor including a rotor and a stator winding, including:
a disk coaxially attached to a shaft of the synchronous motor;
a signal outputter to periodically output a plurality of types of signals according to a rotation angle of the disk;
a first magnet that rotates at the rotation angle the same as the shaft of the synchronous motor; and
a first magnetic sensor to detect a magnetic flux, disposed to face the first magnet at a predetermined spacing.

The rotation angle detection unit may include:
a main driving gear coaxially attached to the shaft of the synchronous motor;
a first driven gear to engage and rotate with the main driving gear, the first driven gear having the number of teeth different from that of the main driving gear;
a second driven gear to engage and rotate with the main driving gear, the second driven gear having the number of teeth different from that of the first driven gear;
a second magnet that rotates at the rotation angle same as the shaft of the first driven gear;
a second magnetic sensor to detect a magnetic flux, disposed to face the second magnet at a predetermined spacing;
a third magnet that rotates at the rotation angle same as the second driven gear; and
a third magnetic sensor to detect a magnetic flux, disposed to face the third magnet at a predetermined spacing.

### Advantageous Effects of Invention

According to the present disclosure, one can easily detect an absolute rotation angle of a rotor.

### Brief Description of Drawings

FIG. 1 is a drawing illustrating the outline configuration of an electric actuator system of an embodiment;
FIG. 2 is a perspective view of an absolute unit of an embodiment;
FIG. 3 is a side view of an absolute unit of an embodiment;
FIG. 4 is a diagram illustrating a configuration on a baseplate in an absolute unit of an embodiment;
FIG. 5 is a diagram illustrating an example of positions in terms of an electric angle of a stator and a rotor of an embodiment;
FIG. 6 is a diagram illustrating transitions of rotation angles of a main driving gear, a first driven gear and a second driven gear in an absolute unit of an embodiment;
FIG. 7 is a flow chart illustrating a rotation angle acquisition process for a first rotor of an embodiment;
FIG. 8 is a flow chart illustrating a rotation angle acquisition process for a second rotor of an embodiment;
FIG. 9 is a flow chart illustrating a position acquisition process for a rod of an embodiment.

### Description of Embodiments

Hereinafter, the embodiment of the present disclosure are explained in detail with reference to the drawings.

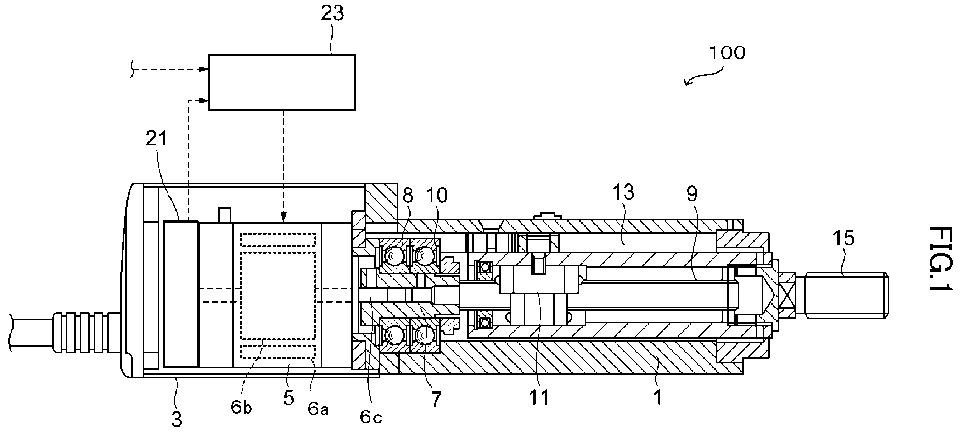

FIG. 1 is a drawing illustrating the outline configuration of an electric actuator system 100 of an embodiment. The configuration of the electric actuator system 100 illustrated in FIG. 1 includes a housing 1, a motor cover 3, a stepping motor 5, a joint member 7, a bearing member 8, a ball screw 9, a bearing member 10, a ball nut 11, a hollow rod 13, a rod 15, an absolute unit 21 and a stepping motor control device 23.

The motor cover 3 is connected to the housing 1. The stepping motor 5 is disposed and accommodated in the motor cover 3. The stepping motor 5 is a two-phase HB type (Hybrid Type) stepping motor. The configuration of the stepping motor 5 includes a cylindrical rotor 6b, a cylindrical stator 6a disposed to accommodate the rotor 6b at a predetermined spacing, and a motor shaft 6c connected to the rotor 6b. In this embodiment, the stepping motor 5 is a two-phase HB type stepping motor, and a Phase A winding and a Phase B winding (not illustrated) are wound around the stator 6a as stator windings.

The ball screw 9 is connected to the motor shaft 6c of the stepping motor 5 via the joint member 7. The ball nut 11 is threadably mounted on the ball screw 9, and the hollow rod 13 is secured to the ball nut 11. In addition, the rod 15 is connected on the tip of the hollow rod 13. The joint member 7 is rotatably supported by the bearing members 8 and 10.

When the stepping motor 5 is driven in response to an electric current supplied to the Phase A and the Phase B winding from the stepping motor control device 23, the rotor 6b and the motor shaft 6c rotate. Furthermore, a rotation of the ball screw 9 axially moves the ball nut 11, the rotation of which is regulated by the rotation of the ball screw 9. The movement of the ball nut 11 axially moves the hollow rod 13 and further, the rod 15.

The absolute unit 21 acquires a rotation angle of the rotor 6b. The absolute unit 21 also acquires the number of revolutions of the rotor 6b and acquires a position of the rod 15 moving axially based on the rotation angle and the number of revolutions ofthe rotor 6b. The details of the absolute unit 21 are mentioned later.

In addition, the stepping motor 5 is controlled by the stepping motor control device 23. In other words, the stepping motor control device 23 controls the stepping motor 5 based on a detection signal from the absolute unit 21 and a command signal that is input separately. In addition, when the stepping motor 5 is started, the stepping motor control device 23 executes a predetermined start control, and thereby provides stable start properties.

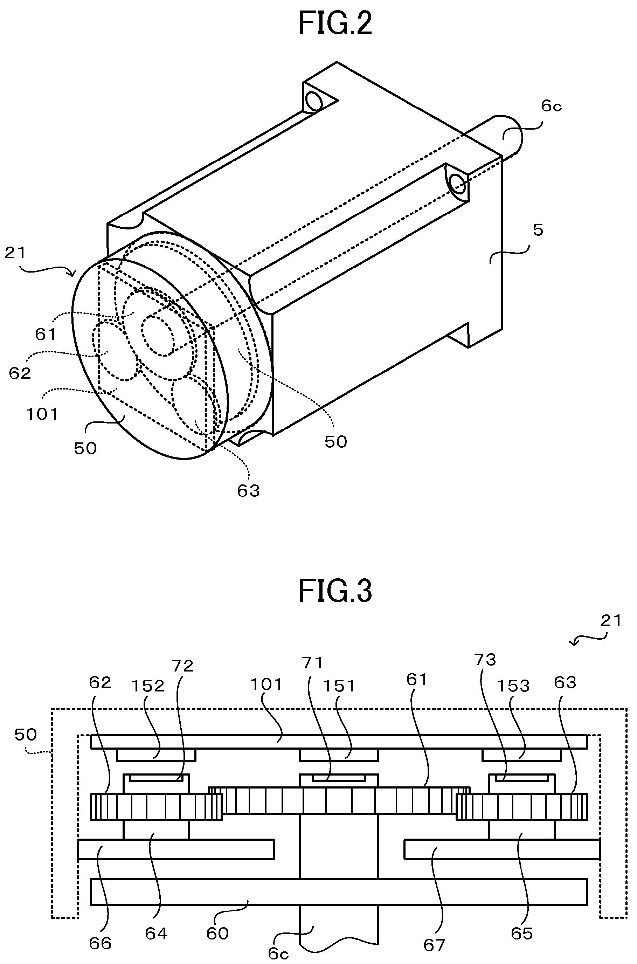

FIG. 2 illustrates a perspective view of the absolute unit 21. FIG. 3 illustrates a side view of the inside of the absolute unit 21. The absolute unit 21 illustrated in FIG. 2 and FIG. 3 is connected to the stepping motor 5. The configuration of the absolute unit 21 includes a unit cover 50, an incremental encoder 60, a main driving gear 61, a first driven gear 62, a second driven gear 63, bearings 64 and 65, gear holding plates 66 and 67, magnets 71, 72 and 73, a baseplate 101, a first magnetic sensor 151, a second magnetic sensor 152, and a third magnetic sensor 153.

The incremental encoder 60 outputs a signal with a rotation ofthe motor shaft 6c. The incremental encoder 60 is, for example, an optical type and the configuration of the incremental encoder 60 includes a photoelectric element (not illustrated), a lattice disk (not illustrated) in which slits are arranged at a predetermined angle pitch, and a light source (not illustrated) located at a position facing the photoelectric element across the lattice disk.

The lattice disk is attached to the motor shaft 6c and the axis of rotation of the lattice disk is coaxial with the axis of rotation of the motor shaft 6c. The lattice disk rotates with a rotation of the motor shaft 6c. When the lattice disk rotates, the light from the light source repeatedly alternates between a state in which the light passes through the slit and reaches the photoelectric element and a state in which the light is blocked by the lattice disk and does not reach the photoelectric element.

The photoelectric element outputs combinations of two signals (a first signal and a second signal) every time light from a light source arrives at the photoelectric element. The combinations of the first signal and the second signal are: a combination of a first high level signal and a second high level signal; a combination of a first low level signal and a second high level signal; a combination of a first low level signal and a second low level signal; and a combination of a first high level signal and a second low level signal. The photoelectric element periodically outputs four combinations of the first and second signals. In addition, the incremental encoder 60 may be a magnetic type and may be an incremental encoder that periodically outputs four combinations of the first and second signals with a rotation of the motor shaft 6c.

The main driving gear 61 is located at the central portion of the space in the unit cover 50 and is attached to the motor shaft 6c. The axis of rotation of the lattice disk is coaxial with the axis of rotation of the motor shaft 6c. The main driving gear 61 rotates with a rotation of the motor shaft 6c.

The gear holding plate 66 is attached to the side surface of the inner wall of the unit cover 50. Furthermore, the bearing 64 is rotatably attached to the gear holding plate 66. The axis of rotation of the bearing 64 is parallel to the axis of rotation of the motor shaft 6c. The first driven gear 62 is attached to the bearing 64. The first driven gear 62 is placed to engage with the main driving gear 61 and rotates with a rotation of the main driving gear 61.

Similarly, the gear holding plate 67 is attached to the side surface of the inner wall of the unit cover 50. Furthermore, the bearing 65 is rotatably attached to the gear holding plate 67. The axis of rotation of the bearing 65 is parallel to the axis of rotation of the motor shaft 6c. The second driven gear 63 is attached to the bearing 65. The second driven gear 63 is arranged to engage with the main driving gear 61 at a position facing the first driven gear 62 with the main driving gear 61 therebetween, and the second driven gear 63 rotates with a rotation of the main driving gear 61.

The numbers of teeth of the main driving gear 61, the first driven gear 62 and the second driven gear 63 are differentiated for the acquisition of the number of revolutions of the rotor 6b mentioned later and for the acquisition of the position of the rod 15. The numbers are set to be relatively prime. For example, the number of teeth of the main driving gear 61 is 25, the number of teeth of the first driven gear 62 is 24, and the number of teeth of the second driven gear 63 is 23.

The magnet 71 is attached to the tip of the motor shaft 6c. The magnet 72 is attached to the tip of the bearing 64. The magnet 73 is attached to the tip of the bearing 65.

The baseplate 101 is attached to the major surface of the inner wall of the unit cover 50. Furthermore, the first magnetic sensor 151, the second magnetic sensor 152, the third magnetic sensor 153 are located on the baseplate 101. The first magnetic sensor 151 is arranged at a position facing the magnet 71 at a predetermined spacing. The first magnetic sensor 151 detects the minute magnetic flux of the magnet 71 that is attached to the tip of the motor shaft 6c using the magnetic detecting element (not illustrated) to output as an analog signal. The voltage of this analog signal changes in response to a rotation of the magnet 71. One revolution of the magnet 71 makes one cycle of the sine wave signal. The first magnetic sensor 151, thereby, detects the rotation angle of the motor shaft 6c. The motor shaft 6c is coaxial with the rotor 6b, both of which rotate at the same rotation speed. Therefore, the first magnetic sensor 151 detects the rotation angle of the rotor 6b (the first rotation angle).

The second magnetic sensor 152 is arranged at a position facing the magnet 72 at a predetermined spacing. The second magnetic sensor 152 detects the minute magnetic flux of the magnet 72 attached to the tip of the bearing 64 using the magnetic detecting element (not illustrated) to output as an analog signal. The voltage of this analog signal changes in response to a rotation of the magnet 72. One revolution of the magnet 72 makes one cycle of the sine wave signal. The second magnetic sensor 152, in this way, detects the rotation angle of the first driven gear 62. Similarly, the third magnetic sensor 153 is arranged at a position facing the magnet 73 at a predetermined spacing. The third magnetic sensor 153 detects minute magnetic flux of the magnet 73 attached to the tip of the bearing 65 using a magnetic detecting element to output as an analog signal. The voltage of this analog signal changes in response to a rotation of the magnet 73. One revolution of the magnet 73 makes one cycle of the sine wave signal. The third magnetic sensor 153, in this way, detects a rotation angle of the second driven gear 63.

Configurations necessary to acquire the rotation angle of the rotor 6b and the position of the rod 15 are arranged on the base plate 101, in addition to the above-mentioned first magnetic sensor 151, the second magnetic sensor 152 and the third magnetic sensor 153.

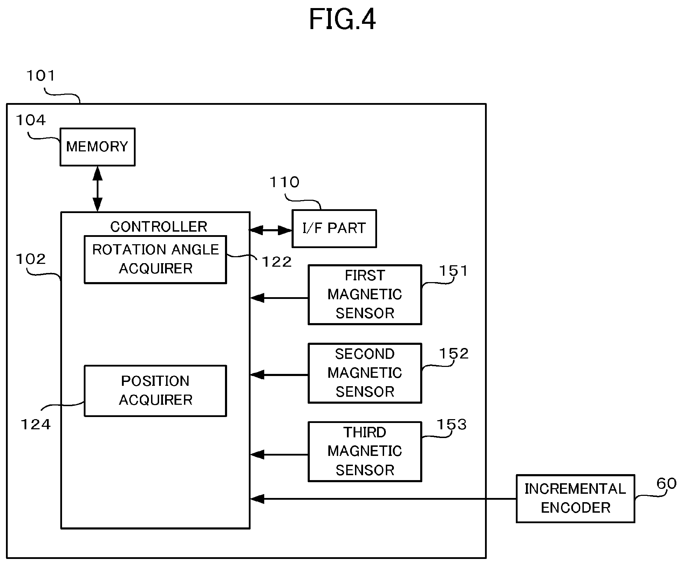

FIG. 4 is a diagram illustrating a configuration on the baseplate 101. As illustrated in FIG. 4, a controller 102, a memory 104, and an interface (I/F) part 110 are disposed on the baseplate 101.

The controller 102 is constructed, for example, of a microcomputer. The controller 102 executes a program stored in the memory 104 and controls the entire absolute unit 21 by processing various data stored in the memory 104. The controller 102 has a function of a rotation angle acquirer 122 as an absolute rotation angle acquisition means and a function of a position acquirer 124 as a moving object position acquisition means. The controller 102 connects, to the incremental encoder 60, the first magnetic sensor 151, the second magnetic sensor 152 and the third magnetic sensor 153 on the baseplate 101. The memory 104, for example, is a Random Access Memory (RAM) or a Read Only Memory (ROM). The memory 104 stores various types of information. The I/F part 110 transfers data from and to the stepping motor control device 23 by controlling the controller 102.

Next, the control of the absolute unit 21 is explained. The stepping motor 5 of this embodiment is a two-phase HB type (Hybrid type) stepping motor, and the rotor 6b is constructed of two iron cores. Fifty small teeth (not illustrated) (tooth pitch: 360 degrees /50 = 7.2 degrees) are provided on the outer perimeter of two iron cores. The small teeth of the North pole side of the iron core and the small teeth of the South pole side of the iron core are displaced by half of a pitch of each other, making 50 pole pairs. That is, there are 50 cycles of an electric angle of 360 degrees (hereinafter, referred to as one cycle of an electric angle) in a mechanical angle of 360 degrees (one revolution of the rotor 6b). Therefore, one cycle of an electric angle corresponds to a mechanical angle of: 360 degrees /50 = 7.2 degrees.

The resolution of the incremental encoder 60 is 800 pulses at a mechanical angle of 360 degrees. That is, as the stepping motor 5 has 50 pole pairs, the resolution of the incremental encoder 60 per one electric angle cycle becomes 800 pulses /50, and the resolution per one electric angle cycle becomes 16. In addition, the resolution of the first magnetic sensor 151 per mechanical angle of 360 degrees is either 200 or 50.

When the first magnetic sensor 151, the resolution thereof per mechanical angle of 360 degrees being 200, is used, the first magnetic sensor 151 can detect a rotation angle of the motor shaft 6c and further a rotation angle of the rotor 6b in the stepping motor 5 to a precision of a mechanical angle of 360 degrees /200 = 1.8 degrees. On the other hand, when the first magnetic sensor 151, the resolution thereof per mechanical angle of 360 degrees being 50, is used, the first magnetic sensor 151 can detect a rotation angle of the rotor 6b in the stepping motor 5 to a precision of a mechanical angle of 360 degrees /50 = 7.2 degrees. Here, the stepping motor 5 has 50 pole pairs as described above, and the mechanical angle per electric angle cycle is 7.2 degrees. That is, if the resolution of the first magnetic sensor 151 per mechanical angle of 360 degrees is 50 or more, the first magnetic sensor 151 can detect any one of the 50 electric angle cycles in a mechanical angle of 360 degrees by detecting the position of the stator 6a facing directly toward the predetermined position of the rotor 6b, the predetermined position of the rotor 6b being positioned in the detected electric angle cycle.

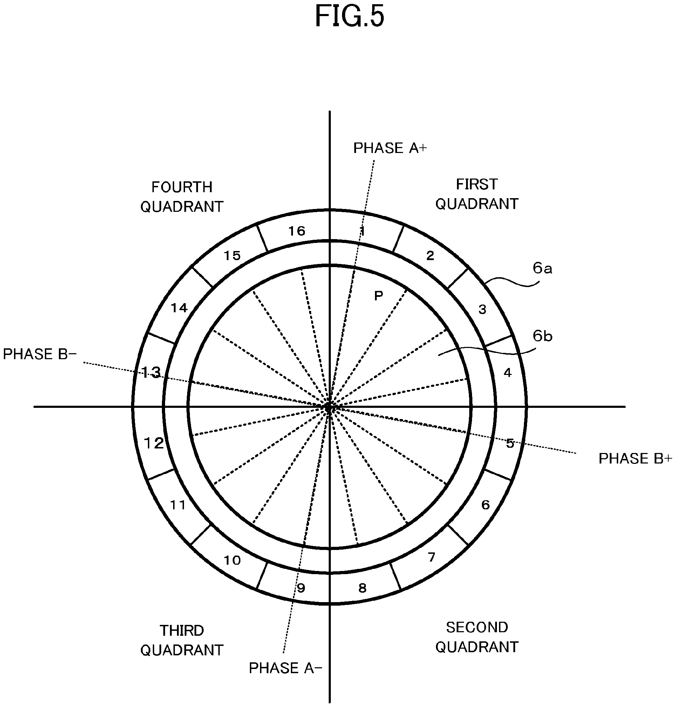

FIG. 5 is a diagram illustrating an example of a position of an electric angle of the stator 6a and the rotor 6b in the stepping motor 5. As mentioned above, the range of positions of the stator 6a and the rotor 6b is divided into 16 in a circumferential direction on the basis that the resolution of the incremental encoder 60 per one electric angle cycle is 16. In addition, numbers 1-16, which identify stator positions, are sequentially provided clockwise to the stator 6a for every electric angle of 22.5 degrees from the position of the electric angle of 0 degrees in a circumferential direction.

In addition, the incremental encoder 60 outputs a combination of the first and the second high level signals when the rotor position P of the rotor 6b faces directly toward stator positions 1,5,9 and 13 of the stator 6a. The incremental encoder 60 outputs a combination of the first low level signal and the second high level signal when the rotor position P of the rotor 6b faces directly toward stator positions 2, 6, 10, and 14 of the stator 6a. The incremental encoder 60 outputs a combination of the first and the second low level signals when the rotor position P of the rotor 6b faces directly toward stator positions 3, 7, 11, and 15 of the stator 6a. The incremental encoder 60 outputs a combination of the first high level signal and the second low level signal when the rotor position P of the rotor 6b faces directly toward stator positions 4, 8, 12, and 16 ofthe stator 6a.

That is, there are 4 patterns of combinations ofthe first signal and the second signal. These 4 patterns correspond to four resolutions of one quadrant illustrated in FIG. 5. As the resolution per one electric angle cycle of the incremental encoder 60 is 16, one electric angle cycle is equally divided into 4, that is, the first, second, third and fourth quadrants.

In addition, in response to a supply state ofthe electric currents for the Phase A winding and the Phase B winding wound around the stator 6a, the rotor position P (refer to FIG. 5), which is the predetermined position ofthe rotor 6b, is located in one ofthe first quadrant, second quadrant, third quadrant and fourth quadrant into which one electric angle cycle is equally divided.

Specifically, supplying a positive electric current to the Phase A winding, a positive electric current to the Phase B winding, a negative electric current to the Phase A winding, or a negative electric current to the Phase B winding, can cause the predetermined position of the rotor 6b to face directly toward a specific stator position. When a positive electric current is supplied to the Phase A winding, the rotor position P is located in the first quadrant and faces directly toward the stator position 1. When a positive electric current is supplied to the Phase B winding, the rotor position P is located in the second quadrant and faces directly toward the stator position 5. When a negative electric current is supplied to the Phase A winding, the rotor position P is located in the third quadrant and faces directly toward the stator position 9. When a negative electric current is supplied to the Phase B winding, the rotor position P is located in the fourth quadrant and faces directly toward the stator position 13. In addition, simultaneously supplying electric currents to the Phase A winding and the Phase B winding can determine the stator position P more finely.

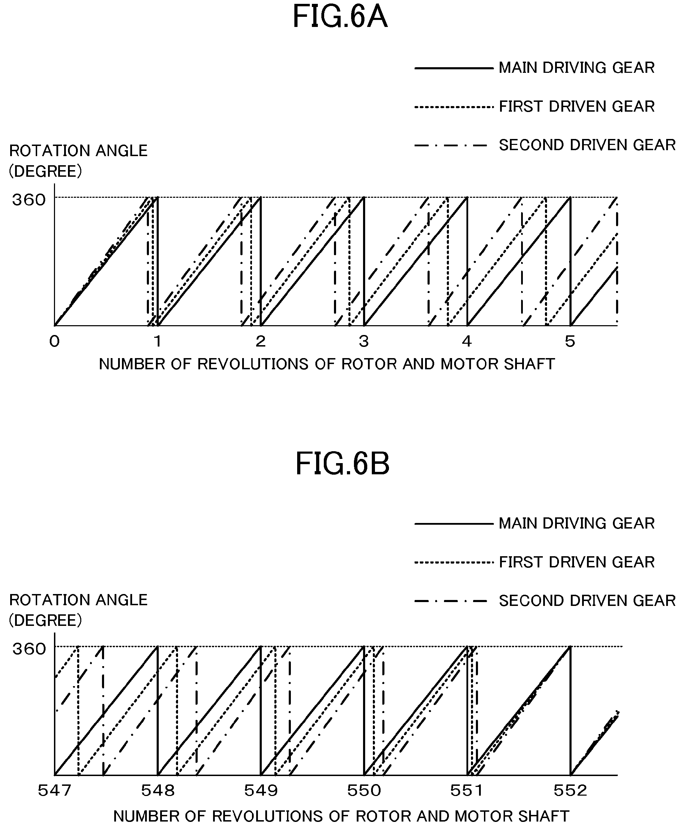

In addition, as described above, the numbers of teeth of the main driving gear 61, the first driven gear 62 and the second driven gear 63 are differentiated to one another. The numbers are set to be relatively prime. For example, when the number of teeth of the main driving gear 61 is 25, the number of teeth of the first driven gear 62 is 24, and the number of teeth of the second driven gear 63 is 23, the motor shaft 6c rotates by the drive of the stepping motor 5, and this rotation of the motor shaft 6c rotates the main driving gear 61. Furthermore, when the rotation of the main driving gear 61 rotates the first driven gear 62 and the second driven gear 63, the transitions of the rotation angles of the main driving gear 61, the first driven gear 62 and the second driven gear 63 are the rotation angle transitions as illustrated in FIG. 6.

The horizontal axis of FIGS. 6A and 6B shows the number of revolutions ofthe rotor 6b and the motor shaft 6c, and the vertical axis shows the rotation angles ofthe main driving gear 61, the first driven gear 62 and the second driven gear 63. In addition, FIG. 6A illustrates the initial part, and FIG. 6B illustrates the last part. As illustrated in FIG. 6A, in the initial state, the rotation angles of the main driving gear 61, the first driven gear 62 and the second driven gear 63 are supposed to be matched. The initial state here indicates a state in which the rod 15 comes closest to the housing 1. A position when the rod 15 comes closest to the housing 1 is set to be a starting position.

When the stepping motor 5 is driven from this initial state, the main driving gear 61, the first driven gear 62 and the second driven gear 63 rotate with a rotation of the motor shaft 6c. When the rotor 6b and the motor shaft 6c make one revolution, the main driving gear 61 makes one revolution similarly. On the other hand, as the number of teeth ofthe first driven gear 62 is less than the number of teeth of the main driving gear 61, the first driven gear 62 makes one revolution faster than the main driving gear 61. In addition, as the number of teeth of the second driven gear 63 is further less than the number of teeth of the first driven gear 62, the second driven gear 63 makes one revolution faster than the first driven gear 62. Therefore, the rotation angles ofthe first driven gear 62 and the second driven gear 63 are gradually shifted as illustrated in FIG. 6A.

Furthermore, as the main driving gear 61, the first driven gear 62 and the second driven gear 63 continue to rotate, as illustrated in FIG. 6B, a time comes when the rotation angles of the main driving gear 61, the first driven gear 62 and the second driven gear 63 become equal. The number of revolutions of the main driving gear 61 in this case, that is, the number of revolutions *n* of the rotor 6b and the motor shaft 6c becomes: *n* = 24 x 23 = 552. As is obvious from FIG. 6, while the number of revolutions of the rotor 6b and the motor shaft 6c is between 0-552, if the combination of the rotation angle of the first driven gear 62 and the rotation angle of the second driven gear 63 are determined, the number of revolutions of the rotor 6b and the motor shaft 6c corresponding to the combination is uniquely determined. That is, the number of revolutions of the rotor 6b can be acquired based on the combination of the rotation angle of the first driven gear 62 (the second rotation angle) and the rotation angle of the second driven gear 63 (the third rotation angle).

When the first magnetic sensor 151, the resolution of which is 200 per mechanical angle of 360 degrees is used., the controller 102 can acquire the absolute rotation angle of the rotor 6b based on the rotation angle of the rotor 6b (the first rotation angle) detected by the first magnetic sensor 151, and the combination of the first and the second signals output from the incremental encoder 60. In addition, when the first magnetic sensor 151, the resolution of which per mechanical angle of 360 degrees is 50, is used, the controller 102 can acquire the absolute rotation angle of the rotor 6b based on the rotation angle of the rotor 6b (the first rotation angle) detected by the first magnetic sensor 151, a quadrant specified by the supply state of the electric current for the Phase A winding and the Phase B winding wound around the stator 6a and the combination of the first and the second signals output from the incremental encoder 60. In addition, the controller 102 acquires the number of revolutions of the rotor 6b and thus a position of the rod 15 from the combination of the rotation angle of the first driven gear 62 detected by the second magnetic sensor 152 and the rotation angle of the second driven gear 63 detected by the second magnetic sensor 152.

In addition, the rotation angle acquirer 122 in the controller 102 outputs the first rotation angle of the rotor 6b and the combination of the first and the second signals to the stepping motor control device 23 via the I/F part 110. The stepping motor control device 23 controls the drive of the stepping motor 5 based on the first rotation angle of the rotor 6b and the combination of the first and the second signals. Specifically, the stepping motor control device 23 specifies a stator position facing directly toward the rotor position P of the rotor 6b in FIG. 5 based on the first rotation angle of the rotor 6b and the combination of the first and the second signals. Furthermore, when the specified stator position is different from a desired stator position, the stepping motor control device 23 supplies the electric current of the stator electric current vector required to cause the rotor position P of the rotor 6b to face directly toward the desired stator position to at least one of the Phase A winding and the Phase B winding.

Hereinafter, referring to the following flow charts, the details of the acquisition of the absolute rotation angle of the rotor 6b and of the position of the rod 15 by the controller 102 in the absolute unit 21 are explained.

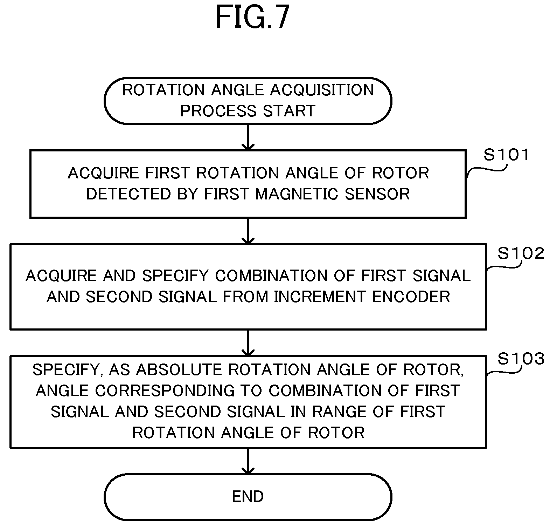

FIG. 7 is a flow chart illustrating an acquisition process of the absolute rotation angle of the rotor 6b by the controller 102 when the first magnetic sensor 151, the resolution of which is 200 per mechanical angle of 360 degrees is used..

The first magnetic sensor 151 detects the rotation angle of the motor shaft 6c, that is, the rotation angle of the rotor 6b (the first rotation angle), and outputs an analog signal indicating the first rotation angle to the controller 102. The rotation angle acquirer 122 in the controller 102 acquires an analog signal indicating the first rotation angle (step S101).

In addition, the incremental encoder 60 outputs to the controller 102 the combination of the first signal and the second signal corresponding to the stator position facing directly toward the predetermined position of the rotor 6b (rotor position P). The rotation angle acquirer 122 in the controller 102 acquires the combination of the first and the second signals. Furthermore, the rotation angle acquirer 122 specifies the combination of the first and the second signals (step S102).

When the first signal and the second signal are high level signals, the rotation angle acquirer 122 can specify that the rotor position P of the rotor 6b faces directly toward one of the stator positions 1,5,9 and 13 of the stator 6a in FIG. 5. In addition, when the first signal is a low level signal and the second signal is a high level signal, the rotation angle acquirer 122 can specify that the rotor position P of the rotor 6b faces directly toward one of the stator positions 2, 6, 10 and 14 of the stator 6a in FIG. 5. In addition, when the first signal and the second signal are low level signals, the rotation angle acquirer 122 can specify that the rotor position P of the rotor 6b faces directly toward one of the stator positions 3, 7, 11 and 15 of the stator 6a in FIG. 5. In addition, when the first signal is a high level signal and the second signal is a low level signal, the rotation angle acquirer 122 can specify that the rotor position P of the rotor 6b faces directly toward one of the stator positions 4, 8, 12 and 16 of the stator 6a in FIG. 5.

Then, the rotation angle acquirer 122 specifies an angle corresponding to the combination of the first and the second signals within a range of the first rotation angle of the rotor 6b as an absolute rotation angle of the rotor 6b (step S103).

As the stepping motor 5 has 50 pole pairs, the resolution per one electric angle cycle of the first magnetic sensor 151, the resolution of which per mechanical angle of 360 degrees is 200, is 4. Therefore, by detecting the position of the stator 6a facing directly toward the predetermined position of the rotor 6b, the first magnetic sensor 151 can detect one of the 50 electric angle cycles in a mechanical angle of 360 degrees, the predetermined position of the rotor 6b being positioned in the detected electric angle cycle, and can detect one of the first to the fourth quadrants corresponding to the one electric angle cycle, the predetermined position of the rotor 6b being positioned in the detected quadrant. Therefore, in step S103, the rotation angle acquirer 122 specifies, based on the first rotation angle acquired in step S101, a quadrant in which the predetermined position of the rotor 6b is positioned among the first to the fourth quadrants corresponding to one of the 50 electric angle cycles.

In addition, as described above, the resolution of the incremental encoder 60 per quadrant is 4, and the incremental encoder 60 can detect one of the four sub-quadrants (a quarter of a quadrant) into which one quadrant is divided, the predetermined position of the rotor 6b being positioned in the sub-quadrant. Therefore, in step S103, the rotation angle acquirer 122 can specify one of the sub-quadrants where the predetermined position of the rotor 6b is positioned in the specified quadrant based on the combination of the first and the second signals specified in step S102. Furthermore, a rotation angle corresponding to the specified sub-quadrant can be specified as an absolute rotation angle of the rotor 6b. The absolute unit 21 can, thereby, detect the absolute rotation angle of the rotor 6b to a precision of a mechanical angle of 360 degrees /200/4 = 0.45 degrees.

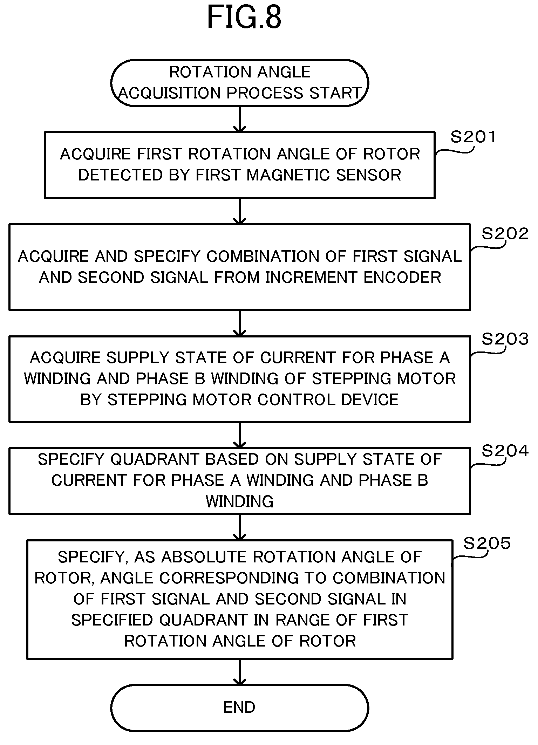

On the other hand, FIG. 8 is a flow chart indicating an acquisition process of a rotation angle of the rotor 6b by the controller 102 when the first magnetic sensor 151, the resolution of which per mechanical angle of 360 degrees is 50, is used.

At first, the stepping motor control device 23 supplies an electric current to the Phase A winding and the Phase B winding wound around the stator 6a of the stepping motor 5. In addition, due to the characteristics of the stepping motor 5, there may be a case in which the rotor position P does not face directly toward a desired stator position in one time current supply, depending on the predetermined position of the rotor 6b. Therefore, it is preferable to change the supply state of the electric current of the Phase A winding and the Phase B winding a plurality of times. Regarding methods to cause the rotor position P to face directly toward a desired stator position, the methods described in the Unexamined Japanese Patent Application Kokai Publication No. 2005-261023 filed by the Applicant of this application are considered.

Then, the first magnetic sensor 151 detects the rotation angle of the motor shaft 6c, that is, the rotation angle of the rotor 6b (the first rotation angle) and outputs an analog signal indicating the first rotation angle to the controller 102. The rotation angle acquirer 122 in the controller 102 acquires an analog signal indicating the first rotation angle (step S201).

In addition, the incremental encoder 60 outputs to the controller 102 the combination of the first and the second signals corresponding to the stator position facing directly toward the predetermined position of the rotor 6b (rotor position P). The rotation angle acquirer 122 in the controller 102 acquires the combination of the first and the second signals. Furthermore, the rotation angle acquirer 122 specifies the combination of the first and the second signals (step S202). The method for specifying the specific combination of the first signal and the second signal is similar to step S102 of FIG. 7.

In addition, the stepping motor control device 23 outputs to the controller 102 the supply state of the electric current for the Phase A winding and the Phase B winding wound around the stator 6a of the stepping motor 5. As described above, as an electric current is supplied to the Phase A winding and the Phase B winding, the rotation angle acquirer 122 in the controller 102 acquires the supply state of the electric current for the Phase A winding and the Phase B winding from the stepping motor control device 23 (step S203).

Then, the rotation angle acquirer 122 in the controller 102 specifies the quadrant in which the predetermined position of the rotor 6b (rotor position P) is positioned based on the supply state of the electric current for the Phase A winding and the Phase B winding (step S204). As described above, the quadrant in which the predetermined position of the rotor 6b is positioned can be uniquely specified from the supply state of the electric current for the Phase A winding and the Phase B winding. When a positive electric current is supplied to the Phase A winding, the rotation angle acquirer 122 specifies that the predetermined position of the rotor 6b is positioned in the first quadrant. When a positive electric current is supplied to the Phase B winding, the rotation angle acquirer 122 specifies that the predetermined position of the rotor 6b is positioned in the second quadrant. When a negative electric current is supplied to the Phase A winding, the rotation angle acquirer 122 specifies that the predetermined position of the rotor 6b is positioned in the third quadrant. When a negative electric current is supplied to the Phase B winding, the rotation angle acquirer 122 specifies that the predetermined position of the rotor 6b is positioned in the fourth quadrant.

Then, the rotation angle acquirer 122 specifies an angle corresponding to the combination of the first and the second signals within a range of the first rotation angle of the rotor 6b in the specified quadrant as an absolute rotation angle of the rotor 6b (step S205).

As the stepping motor 5 has 50 pole pairs, the resolution per one electric angle cycle of the first magnetic sensor 151, the resolution of which per mechanical angle of 360 degrees is 50, is 1. Therefore, the first magnetic sensor 151 can detect one of the 50 electric angle cycles in a mechanical angle of 360 degrees, the predetermined position of the rotor 6b being positioned in one of the electric angle cycles, by detecting the position of the stator 6a that faces directly toward the predetermined position of the rotor 6b. Therefore, in step S205, the rotation angle acquirer 122 detects one of the 50 electric angle cycles, in which the predetermined position of the rotor 6b is positioned based, at first, on the first rotation angle acquired in step S201.

In addition, the quadrant specified in step S204 indicates a quadrant in which the predetermined position of the rotor 6b is positioned among the first to the fourth quadrants corresponding to the electric angle cycle in which the predetermined position of the rotor 6b is specified to be positioned. Therefore, in step S205, the rotation angle acquirer 122 specifies, based on a supply state of the electric current, the quadrant in which the predetermined position of the rotor 6b is positioned among the first to the fourth quadrants, the specified quadrant corresponding to the electric angle cycle.

In addition, as described above, the resolution of the incremental encoder 60 per quadrant is 4, and the incremental encoder 60 can detect one of the four sub-quadrants into which one quadrant is divided, the predetermined position of the rotor 6b being positioned in the sub-quadrant. Therefore, in step S205, the rotation angle acquirer 122 can specify the one sub-quadrant where the predetermined position of the rotor 6b is positioned in the specified quadrant based on the combination of the first and the second signals specified in step S202. Furthermore, the rotation angle corresponding to the specified sub-quadrant can be specified as the absolute rotation angle of the rotor 6b. The absolute unit 21 can, thereby, detect the absolute rotation angle of the rotor 6b to a precision of a mechanical angle of 360 degrees /50/4/4 = 0.45 degrees.

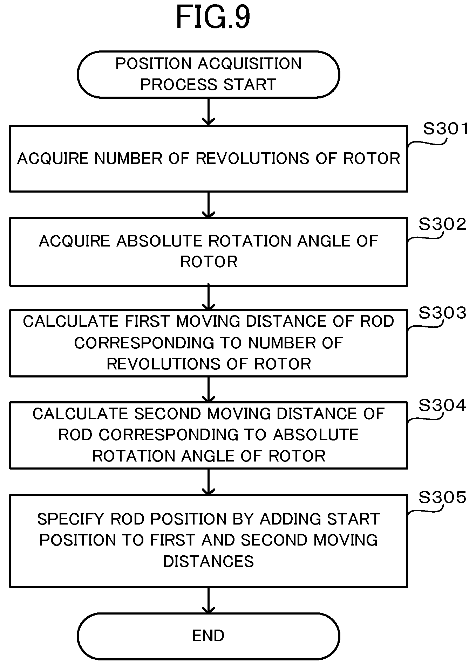

The absolute rotation angle of the rotor 6b is acquired by the processes described in FIG. 7 and FIG. 8, and the position acquisition of the rod 15 is performed. FIG. 9 is a flow chart describing the acquisition process of the position of the rod 15 by the controller 102.

The position acquirer 124 in the controller 102 acquires the number of revolutions of the rotor 6b (step S301). Specifically, when the stepping motor 5 is driven from the initial state in which the rod 15 comes closest to the housing 1, and a rotation of the motor shaft 6c rotates the main driving gear 61, the first driven gear 62 and the second driven gear 63, the position acquirer 124 acquires a rotation angle of the main driving gear 61 (the first rotation angle) detected by the first magnetic sensor 151, a rotation angle of the first driven gear 62 (the second rotation angle) detected by the second magnetic sensor 152 and a rotation angle of the second driven gear 63 (the third rotation angle) detected by the third magnetic sensor 153. Furthermore, the position acquirer 124 acquires the number of revolutions of the rotor 6b uniquely decided by the combination of the rotation angles of the main driving gear 61, the first driven gear 62 and the second driven gear 63. The acquired number of revolutions ofthe rotor 6b is truncated after the decimal point.

Then, the position acquirer 124 acquires the absolute rotation angle of the rotor 6b acquired by the rotation angle acquirer 122 using the processes described in FIG. 7 or FIG. 8 (step S302).

Then, the position acquirer 124 calculates the moving distance of the rod 15 (the first moving distance) to the number of revolutions of the rotor 6b (step S303). For example, in the memory 104, the moving distance ofthe rod 15 per revolution ofthe rotor 6b is stored. The position acquirer 124 calculates the first moving distance of the rod 15 by multiplying the number of revolutions of the rotor 6b acquired in step S301 by the moving distance of the rod 15 per one revolution of the rotor 6b.

Then, the position acquirer 124 calculates the moving distance of the rod 15 (the second moving distance) for the absolute rotation angle of the rotor 6b (step S304). As described above, the absolute unit 21 can detect the absolute rotation angle ofthe rotor 6b to a precision of 0.45 degrees. For example, in response to this, the moving distance of the rod 15 when the rotor 6b rotates 0.45 degrees is stored in the memory 104. The position acquirer 124 calculates the second moving distance of the rod 15 by multiplying the moving distance of the rod 15 when the rotor 6b rotates 0.45 degrees by the absolute rotation angle of the rotor 6b acquired in step S302, and further by dividing the product by 0.45.

Then, the position acquirer 124 specifies the current position of the rod 15 by adding the start position of the rod 15 (position at the initial state) to the first moving distance calculated in step S303, and to the second moving distance calculated in step S304 (step S305).

As explained above, in the absolute unit 21, when the first magnetic sensor 151, the resolution of which is 200 per mechanical angle of 360 degrees is used., the rotation angle acquirer 122 in the controller 102 acquires the first rotation angle of the rotor 6b detected by the first magnetic sensor 151, and acquires the combination of the first and the second signals detected by the incremental encoder 60. Furthermore, the rotation angle acquirer 122 specifies, as the absolute rotation angle of the rotor 6b, an angle corresponding to the combination of the first signal and the second signals, the specified angle being within the first rotation angle of the rotor 6b. The absolute rotation angle of the rotor 6b can, thereby, be detected to a precision of 0.45 degrees.

In addition, in the absolute unit 21, when the first magnetic sensor 151, the resolution of which per mechanical angle of 360 degrees is 50, is used, the rotation angle acquirer 122 in the controller 102 acquires the first rotation angle of the rotor 6b detected by the first magnetic sensor 151, and acquires the combination of the first and the second signals detected by the incremental encoder 60. Furthermore, the rotation angle acquirer 122 specifies, based on the supply state of the electric current for the Phase A winding and the Phase B winding, a quadrant in which the predetermined position of the rotor 6b is positioned, and specifies, as the absolute rotation angle of the rotor 6b, an angle corresponding to the combination of the first and the second signals in the specified quadrant within the first rotation angle of the rotor 6b. The absolute rotation angle of the rotor 6b can, thereby, be detected to a precision of 0.45 degrees.

In this way, the absolute rotation angle of the rotor 6b can be detected easily by combining the inexpensive first magnetic sensor 151 with the incremental encoder 60, and a plurality of rotation detectors and A/D converters are unnecessary unlike conventional magnetic type absolute encoders. Furthermore, as complicated control circuits are not required, costs can be reduced.

In addition, the position acquirer 124 in the controller 102 acquires the number of revolutions of the rotor 6b, calculates the first moving distance of the rod 15 for this number of revolutions and calculates the second moving distance of the rod 15 for the absolute rotation angle of the rotor 6b. The position acquirer 124 can specify the current position of the rod 15 by adding the first moving distance and the second moving distance to the position of the initial state of the rod 15. Furthermore, as information of the number of revolutions is not required to be maintained by using the above-mentioned calculation technique, power supply means for the maintenance, for example, a battery, is not required.

The stepping motor control device 23 can control driving of the stepping motor 5 appropriately based on the first rotation angle of the rotor 6b and the combination of the first and the second signals.

An embodiment is explained above. However the present disclosure is not limited to the above-mentioned embodiment.

In the embodiment mentioned above, two cases are explained in which the resolutions of the first magnetic sensor 151 per mechanical angle of 360 degrees are 50 and 200. However, examples of embodiments are not limited to the above-mentioned embodiment. For example, when the resolution of the first magnetic sensor 151 per mechanical angle of 360 degrees is more than 200, the absolute rotation angle of the rotor 6b can be acquired by the process illustrated in FIG. 7, similarly to the case in which the resolution is 200. Also, when the resolution of the first magnetic sensor 151 per mechanical angle of 360 degrees is more than 50, the absolute rotation angle of the rotor 6b can be acquired by the process illustrated in FIG. 8, similarly to the case in which the resolution is 50.

In addition, in the embodiment, the first magnetic sensor 151, the second magnetic sensor 152 and the third magnetic sensor 153 are used, and, the magnet 71 is attached to the tip of the motor shaft 6c, the magnet 72 is attached to the tip of the bearing 64, and the magnet 73 is attached to the tip of the bearing 65. However, the present disclosure is not limited to thereto. For example, the present disclosure can also be applied similarly to a case in which, instead thereof, means to detect the rotation angle of the main driving gear 61, the first driven gear 62 and the second driven gear 63 is used.

In the embodiment, the magnet 71 is set to be attached to the tip of the motor shaft 6c. The magnet 71 can be any configuration so long as the magnet 71 rotates at the same rotation angle as the motor shaft 6c. For example, a third driven gear is installed that engages and rotates with the main driving gear 61 and has the same number of teeth as the main driving gear 61. The third driven gear may engage with the main driving gear 61 and may rotate with the main driving gear 61 via other driven gears. Furthermore, the magnet 71 may be attached to the tip of the bearing of the third driven gear, and the first magnetic sensor 151 may be arranged at a position facing the magnet 71 at a predetermined spacing.

In the embodiment, the first driven gear 62 and the second driven gear 63 are set to be engaged with the main driving gear 61. The embodiment can be any configuration so long as the first driven gear 62 and the second driven gear 63 rotate with the main driving gear 61. For example, the first driven gear 62 and the second driven gear 63 may rotate with the main driving gear 61 via other driven gears.

In the embodiment, the magnet 72 is attached to the tip of the bearing 64 and the magnet 73 is attached to the tip of the bearing 65. The magnets 72 and 73 can have any configuration so long as the magnet 72 rotates at the same rotation angle as the bearing 64 and the magnet 73 rotates at the same rotation angle as the bearing 65. For example, a fourth driven gear is installed that engages and rotates with the first driven gear 62 and has the same number of teeth as the first driven gear 62. The fourth driven gear may engage with the first driven gear 62 and may rotate with the first driven gear 62 via other driven gears. Furthermore, the magnet 72 may be attached to the tip of the bearing of the fourth driven gear, and the second magnetic sensor 152 may be arranged at a position facing the magnet 72 at a predetermined spacing. In addition, a fifth driven gear is installed that engages and rotates with the second driven gear 63, and has the same number of teeth as the second driven gear 63. The fifth driven gear may engage with the second driven gear 63 and may rotate with the second driven gear 63 via other driven gears. Furthermore, the magnet 73 is attached to the tip of the bearing of the fifth driven gear, and the third magnetic sensor 153 is arranged at a position facing the magnet 73 at a predetermined spacing.

In the embodiment, the baseplate 101 is disposed in the absolute unit 21 to construct the controller 102 and the like on the baseplate. However, the baseplate 101, the controller 102 and the like may be, for example, configured in the stepping motor control device 23 outside the absolute unit 21. The stepping motor 5 is assumed to be a two-phase HB type stepping motor. However, the present disclosure can be similarly applied for a variable reluctance type stepping motor, a Permanent Magnet (PM) type stepping motor and the like. In addition, the numbers of phases of the stepping motor 5 are not limited, and the present disclosure can be applied similarly to various configurations such as a single phase, two-phase, 3-phase, 4-phase, 5-phase stepping motors and the like.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2013-103283, filed on May 15, 2013, the entire disclosure of which is incorporated by reference herein.

### Reference Signs List

1 Housing
3 Motor cover
5 Stepping motor
6a Stator
6b Rotor
6c Motor shaft
7 Joint member
8 Bearing member
9 Ball screw
10 Bearing member
11 Ball nut
13 Hollow rod
15 Rod
21 Absolute unit
23 Stepping motor control device
50 Unit cover
60 Incremental encoder
61 Main driving gear
62 First driven gear
63 Second driven gear
64, 65 Bearing
66, 67 Gear holding plate
71, 72, 73 Magnet
100 Electric actuator system
101 Baseplate
102 Controller
104 Memory
110 I/F part
122 Rotation angle acquirer
124 Position acquirer
151 First magnetic sensor
152 Second magnetic sensor
153 Third magnetic sensor

## Claims

1. A rotation angle detection system to detect a rotation angle of a rotor in a synchronous motor including the rotor and a stator winding, the rotation angle detection system comprising:
a rotation angle detector configured to detect the rotation angle of the rotor and having a resolution equal to or more than the number of pole pairs of the synchronous motor for a mechanical angle of 360 degrees of the rotor;
a signal outputter configured to periodically output a plurality of types of signals according to the rotation angle of the rotor; and
an absolute rotation angle acquirer configured to acquire an absolute rotation angle of the rotor based on the rotation angle of the rotor detected by the rotation angle detector and the types of the signals output by the signal outputter.

2. The rotation angle detection system according to Claim 1,
wherein the resolution is equal to or more than the number of pole pairs of the synchronous motor multiplied by the number of cycles of the combination of the types of signals output by the signal outputter while the rotor rotates by an angle corresponding to one pole pair of the synchronous motor.

3. The rotation angle detection system according to Claim 1, further comprising;
an electric current supply controller configured to perform a control of supplying a plurality of types of electric currents to the stator winding,
wherein the absolute rotation angle acquirer acquires the absolute rotation angle of the rotor based on the types of the electric currents supplied by the electric current supply controller in addition to the rotation angle of the rotor detected by the rotation angle detector and the types of the signals output by the signal outputter.

4. The rotation angle detection system according to any one of Claims 1 to 3, further comprising:
a revolution count detector configured to detect the number of revolutions of the rotor; and
a moving object position acquirer configured to acquire a position of a movable object that is movable on a straight line driven by the synchronous motor based on the rotation angle of the rotor acquired by the absolute rotation angle acquirer and the number of revolutions of the rotor detected by the revolution count detector.

5. The rotation angle detection system according to any one of Claims 1 to 4, wherein the synchronous motor is a stepping motor.

6. A rotation angle detection method by a rotation angle detection system to detect a rotation angle of a rotor in a synchronous motor including the rotor and a stator winding, the method comprising:
a rotation angle detection step of detecting the rotation angle of the rotor with a resolution equal to or more than the number of pole pairs of the synchronous motor for a mechanical angle of 360 degrees of the rotor;
a signal output step of periodically outputting a plurality of types of signals according to the rotation angle of the rotor; and
an absolute rotation angle acquisition step of acquiring an absolute rotation angle of the rotor based on the rotation angle of the rotor detected in the rotation angle detection step and the types of signals output in the signal output step.

7. The rotation angle detection method according to Claim 6,
wherein the resolution is equal to or more than the number of pole pairs of the synchronous motor multiplied by the number of cycles of the combination of the types of signals output in the signal output step while the rotor rotates by an angle corresponding to one pole pair of the synchronous motor.

8. The rotation angle detection method according to Claim 6, further comprising:
an electric current supply control step of performing a control to supply a plurality of types of electric currents to the stator winding;
wherein, in the absolute rotation angle acquisition step, the absolute rotation angle of the rotor is acquired based on the types of electric currents supplied in the electric current supply control step in addition to the rotation angle of the rotor detected in the rotation angle detection step and the types of signals output in the signal output step.

9. The rotation angle detection method according to any one of Claims 6 to 8, further comprising:
revolution count detection step of detecting the number of revolutions of the rotor; and
a moving object position acquisition step of acquiring a position of a moving object moving on a straight line driven by the synchronous motor based on the rotation angle of the rotor acquired in the absolute rotation angle acquisition step and the number of revolutions of the rotor detected in the revolution count detection step.

10. The rotation angle detection method according to any one of Claims 6 to 9, wherein the synchronous motor is a stepping motor.

11. A synchronous motor control system, comprising:
the rotation angle detection system according to any one of Claims 1 to 5; and
a drive controller configured to control driving of the synchronous motor based on a signal indicating the rotation angle of the rotor detected by the rotation angle detector.

12. A synchronous motor control system, comprising:
the rotation angle detection system according to any one of Claims 1 to 5; and
a drive controller configured to control driving of the synchronous motor based on types of signals output by the signal outputter.

13. A rotation angle detection unit to detect a rotation angle of a rotor in a synchronous motor including the rotor and stator winding, comprising:
a disk coaxially attached to a shaft of the synchronous motor;
a signal outputter to periodically output a plurality of types of signals according to a rotation angle of the disk;
a first magnet that rotates at the rotation angle the same as the shaft of the synchronous motor; and
a first magnetic sensor to detect a magnetic flux, disposed to face the first magnet at a predetermined spacing.

14. The rotation angle detection unit according to Claim 13, further comprising:
a main driving gear coaxially attached to the shaft of the synchronous motor;
a first driven gear to engage and rotate with the main driving gear, the first driven gear having the number of teeth different from that of the main driving gear;
a second driven gear to engage and rotate with the main driving gear, the second driven gear having the number of teeth different from that of the first driven gear;
a second magnet that rotates at the rotation angle same as the shaft of the first driven gear;
a second magnetic sensor to detect a magnetic flux, disposed to face the second magnet at a predetermined spacing;
a third magnet that rotates at the rotation angle same as the second driven gear; and
a third magnetic sensor to detect a magnetic flux, disposed to face the third magnet at a predetermined spacing.
